# EUROPEAN PATENT SPECIFICATION

(11) **EP 0 675 397 B1**
(45) Date of publication and mention of the grant of the patent: **12.07.2000**
(21) Application number: 95302018.7
(22) Date of filing: 27.03.1995
(51) Int. Cl.: G03B 27/62

(54) **Method of inspecting a negative film in a photographic processing apparatus**
Verfahren zur Inspektion eines Negativfilmes in einem photographischen Behandlungsgerät
Méthode pour l'inspection d'un film négatif dans un appareil de traitement photographique

(30) Priority: 28.03.1994 JP 5770594
(43) Date of publication of application: 04.10.1995
(73) Proprietor: NORITSU KOKI CO., LTD., Wakayama-shi, Wakayama (JP)
(72) Inventor: Akira, Toshiro, c/o Noritsu Koki Co.,Ltd., Wakayama (JP)
(74) Representative: Hillier, Peter

(56) References cited:
- EP-A- 0 668 531
- US-A- 4 400 074
- US-A- 4 933 713
- PATENT ABSTRACTS OF JAPAN vol. 016 no. 301 (P-1379) ,3 July 1992 & JP-A-04 081742 (BIKUTAA ONKIYOU KOUGIYOU KK;OTHERS: 01) 16 March 1992,

## Description

The present invention relates to a method of inspecting a negative film (referred to as a negative hereinafter) in a photographic processing apparatus.

It is known that a negative may be jammed and injured during the advancing movement along a film passage in a photographic processing apparatus when it has a defect such as a slit in a perforation.

For preventing such an incident, the negatives are inspected by an operator viewing one by one before loading to the photographic printing apparatus. If any defective negative is found, it is reclaimed or repaired for ease of the advancing movement along the passage.

The inspection view of the negatives is a troublesome task as is very low in the efficiency and may allow possible omission of a defect or misjudgement. If any defective film is loaded through possible omission of a defect, misjudgement, or fault action of a drive system in the film passage, it will be jammed and injured causing cancellation of the further action of a printing process.

It is thus essential to stop the advancing movement immediately and remove the defective negative from the film passage by manual action of the operator upon jamming of the defective negative. This will obligate the operator to pay constant attention on the advancing movement of the negative film to prevent generation of trouble. In addition, the inspection for identifying any defect on the negative is not easy but requires a level of skill. It has been much desired to propose a technique for elimination of such a disadvantage.

In US-A- 4933713, a photographic printing method is disclosed where in order to avoid occurrence of cumulative position error, position data of each picture frame is provided in the form of a combination of the number of perforation holes and the number of driving pulses applied to a pulse motor for transporting the film while two adjacent perforation holes are detected.

It is an object of the present invention, in view of the foregoing aspect, to provide a method of inspecting a negative for slits or cuts without checking by view of a service person or operator so that any defective negative film is exactly identified and prevented for loading to the film passage of a photographic processing apparatus.

Accordingly the present invention provides a method of inspecting a negative film in a photographic processing apparatus comprising detecting with a detector location data in the negative film while the film is being advanced towards the photographic processing apparatus, the location data being constituted by regularly spaced perforations in the negative film;
characterised by comparing using an electronic comparator the detected location data with equally distanced reference location data having a regularity and assigned to a standard negative film, the reference data being initiated when the advancing movement of the negative film is commenced; and automatically stopping the advancing movement of the negative film upon finding a fault in the regularity of the detected location data, relative to the reference location data.

According to the inspection method of the present invention, the location data arranged at equal intervals on the negative film in the form of perforations are electrically measured or monitored and electrically compared with the equally distanced reference location data which have a regularity and are arranged on the standard film. If a fault in the regularity of the measured location data on the negative film is found, it is judged that there is at least a slit to one of the perforations or ant obstruction of the same. In response to the judgement, the advancing movement of the negative film is systematically stopped for preventing any damage to the film and the apparatus.

### BRIEF DESCRIPTION OF THE DRAWINGS

Fig. 1 is a schematic explanatory view showing an action of inspecting a negative during the advancing movement according to the present invention; and
Fig. 2 is a flow chart of the procedure of inspecting the negative for defect.

### DETAILED DESCRIPTION OF THE PREFERRED EMBODIMENT

One preferred embodiment of the present invention will be described referring to the accompanying drawings.

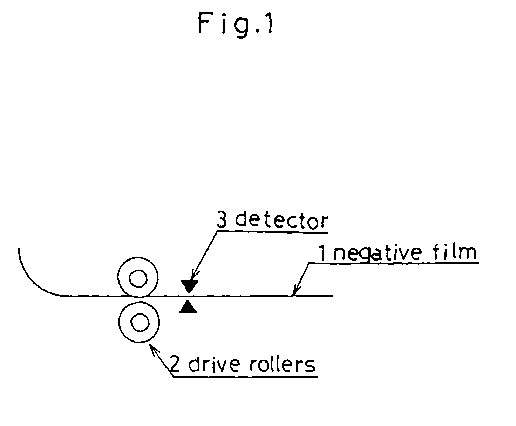

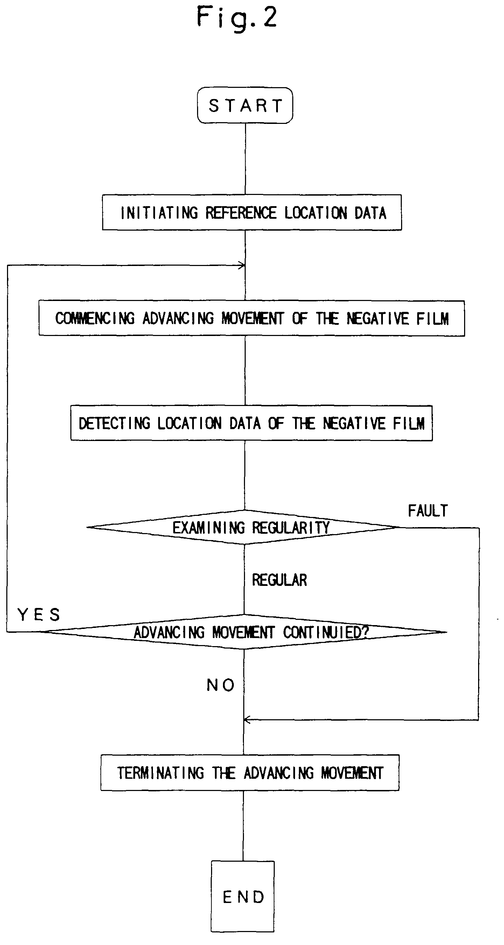

As shown in Fig. 1, a negative film 1 is continuously advanced by the action of drive rollers 2 towards a detector 3 which electrically examines whether or not the negative 1 has a defect such as a slit to perforation. Fig. 2 is a flow chart showing a procedure of the examination. As reference location data arranged at equal intervals on a standard negative are initiated having a degree of regularity, the advancing movement of the negative 1 is commenced. Location data arranged on the negative 1 are detected by the detector 3 and transmitted to a comparator (not shown) where it is electrically compared with the reference location data. More specifically, it is examined whether the location data on the negative 1 are identical or not in the regularity to the reference location data on the standard negative. If a fault in the regularity of the location data is found, the advancing movement of the negative 1 is terminated. When the regularity stands, it is further examined whether the advancing movement of the negative 1 is continued or not before restarting the advancing movement.

In more detail, the location data arranged on the negative 1 are provided in the form of a row of perforations which are aligned at equal intervals of a given distance as sized in physical manner for detection with the detector 3. As the perforations pass the detector 3, the distance between any two adjacent perforations is detected (or measured) and examined (or monitored) by a computer. The distance data are then compared with the reference data for examining the regularity of the perforations. If any fault in the regularity is found, it is judged that there is a slit to one of the perforations in the negative 1 or an obstruction trapped in the perforation. Accordingly, the advancing movement of the negative 1 is automatically terminated to prevent any damage to the negative 1. The detector 3 may be a known perforation detector or the like which allows the negative 1 to be transferred to an appropriate location before canceling the advancing movement.

## Claims

1. A method of inspecting a negative film (1) in a photographic processing apparatus comprising:
detecting with a detector (3) location data in the negative film while the film is being advanced towards the photographic processing apparatus, the location data being constituted by regularly spaced perforations in the negative film;
characterised by comparing, using an electronic comparator, the detected location data with equally distanced reference location data having a regularity and assigned to a standard negative film, the reference data being initiated when the advancing movement of the negative film (1) is commenced; and
automatically stopping the advancing movement of the negative film upon finding a fault in the regularity of the detected location data, relative to the reference location data.

## Patentansprüche

1. Verfahren zur Kontrolle eines Negativfilmes (1) in einer fotografischen Bearbeitungsvorrichtung, das in folgendem besteht:
mit einem Detektor (3) Positionsdaten in dem Negativfilm zu ermitteln, während der Film zu der fotografischen Bearbeitungsvorrichtung vorgerückt wird, wobei die Positionsdaten durch mit regelmäßigen Zwischenräumen angeordnete Perforationen in dem Negativfilm gebildet werden;
gekennzeichnet durch den Vergleich der ermittelten Positionsdaten mit in gleichen Abständen angeordneten Referenz-Positionsdaten, die Regelmäßigkeit aufweisen und einem Standard-Negativfilm zugeordnet sind, unter Verwendung eines elektronischen Komparators, wobei die Referenzdaten gestartet werden, wenn die Vorwärtsbewegung des Negativfilmes (1) aufgenommen wird; und
durch das automatische Anhalten der Vorwärtsbewegung des Negativfilmes, wenn eine Störung in der Regelmäßigkeit der ermittelten Positionsdaten im Verhältnis zu den Referenz-Positionsdaten festgestellt wird.

## Revendications

1. Procédé d'inspection d'un film négatif (1) dans un appareil de traitement photographique, comprenant les étapes qui consistent à:
détecter avec un détecteur (3) des données de localisation dans le film négatif pendant l'avancement du film en direction de l'appareil de traitement photographique, les données de localisation étant formées par des perforations régulièrement espacées dans le film négatif;
caractérisé en ce que l'on compare les données de localisation détectées, en utilisant un comparateur électronique, à des données de localisation de référence situées à des distances uniformes, qui présentent une régularité et sont affectées à un film négatif standard, les données de référence étant initiées lorsque le mouvement d'avance du film négatif (1) commence; et
à stopper automatiquement le mouvement d'avance du film négatif lorsque l'on trouve un défaut dans la régularité des données de localisation détectées par rapport aux données de localisation de référence.
